# EUROPÄISCHE PATENTSCHRIFT

(11) **EP 2 758 338 B1**
(45) Veröffentlichungstag und Bekanntmachung des Hinweises auf die Patenterteilung: **01.01.2020**
(21) Anmeldenummer: 12726745.8
(22) Anmeldetag: 08.06.2012
(51) Int. Cl.: C01B 3/38

(54) **VERFAHREN ZUR HERSTELLUNG VON SYNTHESEGAS**
METHOD FOR PRODUCING SYNTHETIC GAS
PROCÉDÉ DE FABRICATION DE GAZ DE SYNTHÈSE

(30) Priorität: 20.09.2011 DE 102011113699
(43) Veröffentlichungstag der Anmeldung: 30.07.2014
(73) Patentinhaber: Air Liquide Global E&C Solutions Germany GmbH, 60439 Frankfurt am Main (DE)
(72) Erfinder: MORGENROTH, Rainer, 61381 Friedrichsdorf (DE); BORMANN, Andreas, 60389 Frankfurt am Main (DE)
(86) Internationale Anmeldenummer: PCT/EP2012/002430
(87) Internationale Veröffentlichungsnummer: WO 2013/041157

(56) Entgegenhaltungen:
- EP-A2- 1 188 713
- WO-A1-2007/137068
- DE-A1-102005 001 261
- DE-A1-102008 039 014
- US-A- 4 927 857

## Beschreibung

### Gebiet der Erfindung

Bei der Erfindung handelt es sich um ein Verfahren zur Herstellung von Synthesegas aus kohlenwasserstoffhaltigem Einsatzgas, wie beispielsweise Erdgas, umfassend eine Aufbereitung des Einsatzgases und, daran anschließend, einen Hauptreformierungsschritt, durchgeführt in einer Hauptreformierungszone. Die Aufbereitung des Einsatzgases beinhaltet dabei einen Vorreformierungsschritt, der in einer Vorreformierungszone durchgeführt wird.

Der Begriff Synthesegas soll hier im Wesentlichen aus Kohlenmonoxid und Wasserstoff bestehendes Gas zur Verwendung z. B. für die Ammoniak-, Methanol-, Oxo- oder die Fischer-Tropsch-Synthese umfassen.

### Stand der Technik

Verfahren zur Herstellung von Synthesegas durch Aufbereitung und Reformierung eines kohlenwasserstoffhaltigen Einsatzgases, wie Erdgas oder verdampftes Naphtha, sind bekannt und werden beispielsweise in Ullmann's Encyclopedia of Industrial Chemistry, Sixth Edition, Bd. 15, Gas Production, beschrieben.

Die Aufbereitung des Einsatzgases beginnt, wenn erforderlich, mit einem Verfahrensschritt zur Entfernung von schwefelhaltigen Bestandteilen. Die dafür geeigneten Verfahren sind dem Fachmann bekannt. Um die Standzeiten der in den nachfolgenden Prozessstufen verwendeten Katalysatoren nicht zu beeinträchtigen, sollte der Schwefelgehalt des Einsatzgases unter 0,1 ppm betragen.

Sodann erfolgt ein als Vorreformierung bezeichneter Verfahrensschritt, bei dem katalytisch ein Teil der im Einsatzgas enthaltenen höheren Kohlenwasserstoffe mit Kohlenstoffzahlen größer als eins mit Dampf zu Methan reformiert werden. Durch diese Maßnahme kann die Bildung von Ruß im nachfolgenden Reformierreaktor verringert werden.

In die Vorreformierung wird das Einsatzgas mit Temperaturen von typischerweise ca. 500°C eingeleitet und verlässt diese, nach erfolgte r Umwandlung der höheren Kohlenwasserstoffe in Methan, beispielsweise mit ca. 470°C.

Dem Vorreformierungsschritt schließt sich dann ein Hauptreformierungsschritt an, der üblicherweise in einem Dampfreformer (SMR) oder einem autothermen Reformer (ATR) durchgeführt wird. Möglich ist es auch, die beiden letztgenannten Reformierungstechniken im Hauptreformierungsschritt miteinander zu kombinieren (sogenanntes Combined Reforming). Da mithin die Umsetzung in mehreren Reaktoren erfolgen kann, wird der Verfahrensbereich, in dem der Hauptreformierungsschritt erfolgt, nachfolgend vereinheitlichend als Hauptreformierungszone bezeichnet. Als wesentlicher Unterschied zwischen der Vorreformierung und dem Hauptreformierungsschritt ergibt sich, dass bei der Hauptreformierung die weitgehende Umsetzung der Kohlenwasserstoffe zu den Synthesegasbestandteilen je nach Lage des entsprechenden Reaktionsgleichgewichtes erfolgt.

Um die Hauptreformierungszone bezüglich Energieausbeute und Ausnutzung des Reaktorvolumens effizient zu betreiben, ist es erforderlich, dass das Einsatzgas mit einer Temperatur, die der Prozesstemperatur im Reformierreaktor möglichst nahe kommt, eingeleitet wird. Üblicherweise liegt die Prozesstemperatur in der Hauptreformierungszone über 850°C.

Gemäß dem bisherigen Stand der Technik erfolgt die Temperaturerhöhung des Einsatzgases zwischen dem Vorreformierungsschritt und dem Hauptreformierungsschritt durch indirekte Erwärmung mittels eines oder mehrerer Wärmetauscher, vgl. Ullmann's Encyclopedia of Industrial Chemistry, Sixth Edition, Bd. 15, Gas Production, Chap. 2.4.3., Fig. 9 und Chap. 7.1., Fig. 79.

Nachteilig an dieser Methode zur Erwärmung des Einsatzgases ist, dass, bei wirtschaftlich vertretbarem Investitionsaufwand, mit Wärmetauschern oder gefeuerten Heizern die Gastemperatur lediglich auf ca. 650°C aufgeheizt we rden kann, sodass ein großer Teil der Gaserwärmung noch in der Hauptreformierungszone selbst erfolgen muss.

In der Hauptreformierungszone erfolgt die Umsetzung des kohlenwasserstoffhaltigen Einsatzgases entweder in einem Dampfreformer oder in einem autothermen Reformer. Dabei wird beim Dampfreformer dem Einsatzgas als Reaktionspartner Wasserdampf zugegeben, während für die Umsetzung im ATR zusätzlich zum Wasserdampf auch eine definierte Menge Sauerstoff in Form von Luft, sauerstoffangereicherter Luft oder reinen Sauerstoffs zugesetzt wird. Beim Dampfreformer erfolgt der Eintrag der zusätzlich benötigten Wärmeenergie durch außerhalb der Reformerrohre liegende Brenner in einem Reformerofen, wohingegen sich beim ATR der oder die Brenner im Reaktorinneren befinden und dort für den Eintrag der für die Reformierung benötigten Wärmeenergie mittels unterstöchiometrischer Verbrennung eines Teils des Einsatzgases mit dem zugesetzten Sauerstoff sorgen. Im letztgenannten Fall sind wegen der oben beschriebenen, niedrigen Gaseintrittstemperatur besondere Maßnahmen erforderlich, um die Dampfreformierung durch Zündung des Brenners zu starten und aufrechtzuerhalten.

Um die Zündung des Reformerbrenners auszulösen, wird in der Praxis dem Einsatzgas vor dem Eintritt in den Reaktor zusätzlich zu den Reaktionspartnern Dampf und Sauerstoff auch Wasserstoff beigemischt, um die Zündtemperatur des Gases zu senken. Theoretische andere oder ergänzende Möglichkeiten sind die Verwendung eines Zündkatalysators oder von Hilfszündbrennern oder Pilotbrennern im Reaktor, vgl. DE 41 30 718 A1 und DE 3 800 862 A1. Der Zündkatalysator ist aber im Reaktor zu hohen Temperaturen ausgesetzt, um lange funktionsfähig zu bleiben. Zusätzliche Pilotbrenner sind konstruktiv sehr aufwändig, wartungsanfällig und verursachen hohe zusätzliche Investitionskosten. Eine dritte, bisher nur theoretische Möglichkeit, wäre die ausreichende Vorheizung des Gases auf eine Temperatur über 700°C, was aber, wie schon erläutert, bei den bisher in der Technik üblichen Methoden der Gaserwärmung mittels Wärmetauschern oder gefeuerten Heizern mit wirtschaftlich vertretbarem Aufwand nicht möglich ist.

### Beschreibung der Erfindung

Es bestand daher die Aufgabe, ein wirtschaftliches Verfahren zur Herstellung von Synthesegas zur Verfügung zu stellen, das die beschriebenen Nachteile des Stands der Technik vermeidet.

Die Aufgabe wird durch ein Verfahren zur Herstellung von Synthesegas aus kohlenwasserstoffhaltigem Einsatzgas gemäß den Ansprüchen 1 bis 4, umfassend eine Aufbereitung des Einsatzgases und, daran anschließend, einen Hauptreformierungsschritt des Einsatzgases zu einem Kohlenoxide und Wasserstoff umfassenden Synthesegas, durchgeführt in einer Hauptreformierungszone, dadurch gelöst, dass die Aufbereitung des Einsatzgases einen Vorreformierungsschritt zur mindestens teilweisen Umwandlung höherer Kohlenwasserstoffe in Methan in einer Vorreformierungszone und eine vor der Einleitung des vorreformierten Einsatzgases in die Hauptreformierungszone durchgeführte Erwärmung des Einsatzgases durch exotherme katalytische Partialoxidation der Kohlenwasserstoffe unter Partialoxidationsbedingungen und unter Zugabe einer kontrollierten Menge eines Oxidationsmittels umfasst, wobei die Erwärmung des Einsatzgases durch exotherme katalytische Partialoxidation und der Vorreformierungsschritt in einem gemeinsamen Reaktor durchgeführt werden, wobei die Katalysatoren für die Vorreformierung und die Partialoxidation in getrennten Betten vorgesehen werden, wobei der Partialoxidationskatalysator dem Vorreformierungskatalysator nachgeschaltet ist und das Oxidationsmittel strömungsmäßig nach der Vorreformierungszone zugegeben wird.

Unter Partialoxidation wird dabei die unterstöchiometrische, exotherm verlaufende Oxidation eines Teils der im Einsatzgas enthaltenen Kohlenwasserstoffe mit einem im Unterschuss zugegebenen Oxidationsmittel vor Eintritt des Einsatzgases in die Hauptreformierungszone verstanden. Das Oxidationsmittel umfasst dabei in der Regel Sauerstoff; dabei wird ein Teil der Kohlenwasserstoffe unter Wärmefreisetzung verbrannt. Die Partialoxidation wird in Gegenwart eines geeigneten Katalysators und in einem separaten, stromwärts unmittelbar vor der Hauptreformierungszone befindlichen Reaktor durchgeführt. Um die Partialoxidation auszulösen, wird das Einsatzgas mit dem Oxidationsmittel angereichert und ein Katalysator verwendet, der als sogenannter Zündkatalysator wirkt, indem er die Partialoxidation bereits bei einer Gastemperatur oberhalb ca. 450°C in Gang setzt. In Frage kommen hierfür insbesondere Katalysatoren, die als Aktivkomponente mindestens ein Metall der Gruppen 8, 9 oder 10 (VIII. Nebengruppe) des Periodensystems der Elemente enthalten. Dies sind in der Regel Platinmetalle wie Rhodium, Palladium oder Platin. Das Metall kann in metallischer und/oder in oxidischer Form in dem Katalysator enthalten sein. Als gut geeignet hat sich beispielsweise Rhodium in Form von Rhodiumdioxid gezeigt; möglich ist es aber auch, mindestens einen Teil der teuren Edelmetalle durch kostengünstigere Metalle wie Nickel zu ersetzen. Der für die exotherme katalytische Partialoxidation eingesetzte Katalysator kann dabei als Schüttung körnigen Feststoffs, als Monolith oder als Metallnetz vorliegen, auf die oder in die die Aktivkomponenten in geeigneter, dem Fachmann bekannter Weise aufgebracht oder eingebracht wurden.

Die bei der Partialoxidation ablaufenden chemischen Reaktionen verlaufen in der Summe exotherm. Durch Einstellung der zugegebenen Menge des Oxidationsmittels, beispielsweise der Sauerstoffmenge, kann der Umfang der Partialoxidation, und damit die Temperaturerhöhung des Einsatzgases eingestellt und geregelt werden. Hierdurch bietet sich die Möglichkeit, die Durchführung der Partialoxidation beispielsweise mit Hilfe eines Prozessleitsystems zu automatisieren, wobei die gewünschte Endtemperatur oder Temperaturerhöhung des Einsatzgases vor Eintritt in die Hauptreformierungszone als Regelgröße und die zugesetzte Oxidationsmittelmenge als Stellgröße dienen.

Durch die Anwendung des erfindungsgemäßen Verfahrens kann auf wirtschaftliche Weise die Gaseintrittstemperatur in die nachfolgende Hauptreformierungszone so hoch eingestellt werden, dass kein wertvoller Reaktorraum mehr für die Gaserwärmung verwendet werden muss. Auf diese Weise kann die Kapazität bestehender Reformierreaktoren erhöht werden. Ferner haben die verwendeten Zündkatalysatoren eine höhere Standzeit, da sie nicht, wie zuvor im Stand der Technik vorgeschlagen, innerhalb der Hauptreformierungszone mit ihren drastischen Temperaturbedingungen angeordnet sind.

Innerhalb der Hauptreformeriungszone können die aus dem Stand der Technik bekannten Reformierreaktoren, insbesondere der Dampfreformer (SMR) und der autotherme Reformer (ATR) vorteilhaft eingesetzt werden. Denkbar ist der vorteilhafte Einsatz der Erfindung auch im Zusammenhang mit anderen Reformierreaktoren oder Kombinationen bzw. Verschaltungen der genannten Reformierreaktoren. Wenn die Hauptreformierungszone aus einem Dampfreformer besteht, kann erfindungsgemäß die Energiezufuhr im Reformerofen verrringert werden. Im Falle der Verwendung eines Autothermreaktors als Reformierreaktor kann auf die bisher notwendige Zugabe von Wasserstoff zum Einsatzgas zur Senkung der Zündtemperatur und/oder auf die Verwendung eines Zünd- bzw. Pilotbrenners verzichtet werden. Günstig ist es dabei, dass die Temperatur des Einsatzgases durch die exotherme katalytische Partialoxidation soweit angehoben wird, dass sich das Einsatzgas bei Eintritt in den Autothermreformer unter Zugabe zusätzlichen Sauerstoffs selbstentzündet. Dies ist von besonderem Vorteil, da Wasserstoff an den Standorten dieser Reformieranlagen, insbesondere vor deren Inbetriebnahme, nicht immer leicht verfügbar ist.

Überrascherweise hat sich gezeigt, dass die erfindungsgemäße Anordnung der Partialoxidation der Kohlenwasserstoffe im Einsatzgas vor dem Eintritt des Einsatzgases in die Hauptreformierungsstufe in vorteilhafter Weise mit der Vorreformierungsstufe zusammenwirkt. Ziel der Vorreformierungsstufe ist es, die Konzentration höherer Kohlenwasserstoffe im Einsatzgas durch ihre teilweise Umwandlung zu Methan zu verringern, um nachteiligen Wirkungen in der Hauptreformierungsstufe, beispielsweise der Koksablagerung, vorzubeugen. Gerade höhere Kohlenwasserstoffe werden aber bei der Partialoxidation im Vergleich zu Methan bevorzugt umgesetzt. Daher nimmt bei der Durchführung der Partialoxidation die Konzentration höherer Kohlenwasserstoffe im Einsatzgas zusätzlich ab, sodass sich die nachteiligen Wirkungen der höheren Kohlenwasserstoffe in der Hauptreformierungsstufe noch weiter verringern.

Eine nicht erfindungsgemäße Aufbereitungsvorrichtung zur Aufbereitung von zur Reformierung bestimmtem, kohlenwasserstoffhaltigem Einsatzgas, welche gekennzeichnet wird durch eine Zuleitung für das Einsatzgas, mindestens einen Festbettreaktor, mindestens eine Katalysatorzone für den Vorreformierungskatalysator, mindestens eine Katalysatorzone für den Partialoxidationskatalysator, mindestens eine Zufuhrleitung für das Oxidationsmittel, sowie eine Ableitung für das aufbereite Einsatzgas zur Hauptreformierungszone, wird ebenfalls beschrieben.

### Weitere Merkmale der Erfindung

Ein Merkmal der Erfindung besteht darin, die Erwärmung des Einsatzgases durch Partialoxidation und die zur Aufbereitung gehörende Vorreformierung des Einsatzgases zur Umwandlung höherer Kohlenwasserstoffe in Methan in einem gemeinsamen Reaktor durchzuführen. Auf diese Weise kann durch die Verwendung eines gemeinsamen Reaktorgehäuses der Platzbedarf verringert und Investitionskosten gespart werden. Eine vorteilhafte Ausgestaltung der Erfindung sieht dabei vor, die Katalysatoren für die Vorreformierung und für die Partialoxidation in getrennten Betten vorzusehen, wobei der Partialoxidationskatalysator dem Vorreformierungskatalysator nachgeschaltet ist und das Oxidationsmittel strömungsmäßig nach der Vorreformierungszone zugegeben wird. Für Auslegungen, bei denen der Druckverlust der Anordnung möglichst minimiert werden soll, ist es günstig, den Partialoxidationskatalysator nicht als Schüttung körnigen Feststoffs, sondern als Monolith oder als Metallnetz bereitzustellen.

Eine nicht erfindungsgemäße Ausgestaltung des erfindungsgemäßen Verfahrens besteht darin, dass die Katalysatoren für die Partialoxidation und für die Vorreformierung innerhalb des gemeinsam genutzten Reaktorgehäuses in mindestens einem gemeinsamen, vom Einsatzgas durchströmten Festbett gemischt vorliegen. Beide Katalysatoren werden dabei bevorzugt als körnige Feststoffe, beispielsweise als Formkörper, Presslinge oder Extrudat eingesetzt. Dabei ist es auch möglich, das Gas nacheinander durch mehrere Festbetten zu führen, wobei das Mischungsverhältnis der Katalysatoren in den Festbetten jeweils der gewünschten Wirkung angepasst wird. Das Oxidationsmittel kann dabei vor Eintritt in das erste Katalysatorbett oder bevorzugt verteilt vor Eintritt in nachfolgende Katalysatorbetten der Aufbereitungszone zugegeben werden. Auf diese Weise ist eine hohe Anpassungsfähigkeit an die Erfordernisse des in der Hauptreformierungszone durchgeführten Verfahrensteils gegeben.

Als besonders günstig hat es sich erwiesen, das Einsatzgas vor der Durchführung der exothermen katalytischen Partialoxidation auf eine Eintrittstemperatur von mindestens 250 °C, bevorzugt mindestens 400 °C, vorzuwärmen, damit ein Anspringen der Partialoxidation an dem dafür bereitgestellten Katalysator erfolgen kann. Die Anspringtemperatur hängt von der Raumgeschwindigkeit des Einsatzgases bezogen auf das Katalysatorvolumen des Partialoxidationskatalysators sowie von der Konzentration höherer Kohlenwasserstoffe ab. Der Fachmann kann geeignete Eintrittstemperaturen durch Routineversuche zur Anspringtemperatur leicht ermitteln. Bei Anordnung des Vorreformierungskatalysators und des Partialoxidationskatalysators in einem gemeinsamen Reaktorgehäuse ist die Austrittstemperatur des Einsatzgases aus der Vorreformierungsstufe meist ausreichend, um ein sicheres Anspringen der Partialoxidation zu gewährleisten.

### Ausführungsbeispiele

Weiterbildungen, Vorteile und Anwendungsmöglichkeiten der Erfindung ergeben sich auch aus der nachfolgenden Beschreibung von Ausführungsbeispielen und Zeichnungen.

Im Folgenden soll anhand von Zeichnungen die Durchführung und weitere Vorteile des erfindungsgemäßen Verfahrens im Vergleich mit dem Stand der Technik erläutert werden.

Es zeigen
Fig. 1 beispielhaft ein Ablaufschema des Verfahrens nach dem Stand der Technik
Fig. 2 ein Ablaufschema des erfindungsgemäßen Verfahrens
Fig. 3 ein Ablaufschema einer weiteren bevorzugten Ausgestaltung des erfindungsgemäßen Verfahrens

### Verfahren gemäß Stand der Technik (Vergleichsbeispiel)

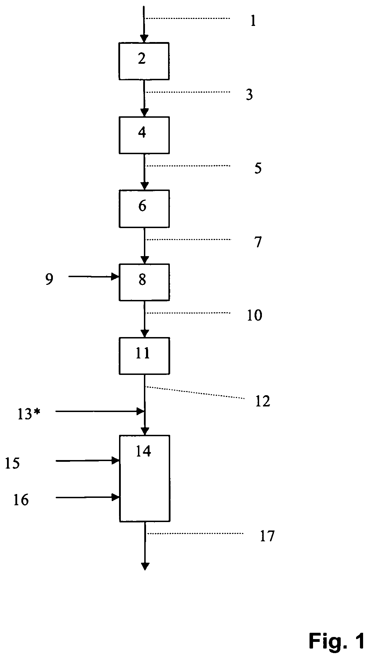

In Fig. 1 ist beispielhaft ein Verfahrensablauf nach dem Stand der Technik dargestellt. Erdgas wird als Einsatzgas (1 und 3) mittels eines Wärmetauschers (2) erwärmt und in der Anlage (4) entschwefelt. Dabei wird üblicherweise in Form von Schwefelwasserstoff vorhandener Schwefel aus dem Gas entfernt. Die hierbei, sowie bei den restlichen Verfahrensschritten anzuwendenden Bedingungen wie Drücke, Temperaturen, verwendete Katalysatoren und Raumgeschwindigkeiten sind im Stand der Technik enthalten und dem Fachmann bekannt. Sie werden nachfolgend nur insoweit genannt, wie sie zum Verständnis der Unterschiede zwischen Stand der Technik und Erfindung notwendig sind.

Mittels Wärmetauscher (6) wird die Gastemperatur des entschwefelten Einsatzgases (5) auf 500 °C eingestellt und anschließend das entschw efelte und vorerwärmte Einsatzgas (7) in die Vorreformierungszone (8) eingeleitet. Dort wird es mit Wasserdampf (9) angereichert und ein Teil der im Gas enthaltenen höheren Kohlenwasserstoffe wird katalytisch in Methan umgewandelt. Die chemischen Reaktionen verlaufen dabei endotherm und der Prozess wird adiabatisch durchgeführt. Dies führt zu einer leichten Senkung der Gastemperatur, sodass das Einsatzgas (10) mit einer Temperatur von ca. 470°C die Vorreformierungszone verlässt. Gemäß dem bisherigen Stand der Technik wird das Einsatzgas anschließend indirekt, mittels eines oder mehrerer Wärmetauscher (11) auf ca. 650°C erhitzt. Der sich anschließende Hauptrefo rmierungsschritt (14) kann grundsätzlich in einem Dampfreformer oder einem autothermen Reformer durchgeführt werden. Wenn ein ATR verwendet wird, wird vor dem Eintritt in die Hauptreformierungszone dem Einsatzgas (12) Wasserstoff (13*) hinzugefügt und/oder zusätzlich Zündbrenner vorgesehen.

Das Einsatzgas wird dann durch einen im Kopf des ATR befindlichen Brenner in den Reformer eingeleitet. Ferner werden dem ATR Dampf und Sauerstoff als Reaktionspartner zugeführt. Das aus dem Brenner in den oberen Raum des Reformers austretende Gasgemisch zündet nach Wasserstoffzugabe selbsttätig, ansonsten wird die Zündung durch einen nicht bildlich dargestellten Zündbrenner bewirkt. Die durch Umsetzung der Kohlenwasserstoffe mit dem Sauerstoff gewonnene Wärmeenergie ermöglicht die im Reformer katalytisch durchgeführte Umsetzung des Einsatzgases zu Synthesegas, das als Strom (17) den Reformer zur weiteren Behandlung verlässt.

### Erfindungsgemäßes Verfahren

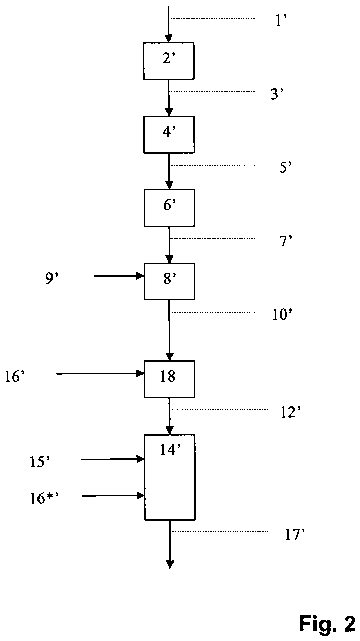

Fig. 2 stellt ein Ablaufschema des erfindungsgemäßen Verfahrens dar. Hier erfolgt die Gaserwärmung vor dem Eintritt in die Hauptreformierungszone durch eine stromabwärts von der Vorreformierungszone (8') angeordnete Partialoxidation (18) unter Zugabe einer unterstöchiometrischen Menge Sauerstoffs (16'). Im Brenner des nachgeschalteten ATR (14') kommt es zur Selbstentzündung nach Zugabe von weiterem Sauerstoff (16*'), ohne dass es einer weiteren Aufheizung des Einsatzgases (12') durch Wärmetauscher oder gefeuerte Heizer oder der Anwesenheit eines Zündbrenners bedarf.

### Erfindungsgemäßes Verfahren

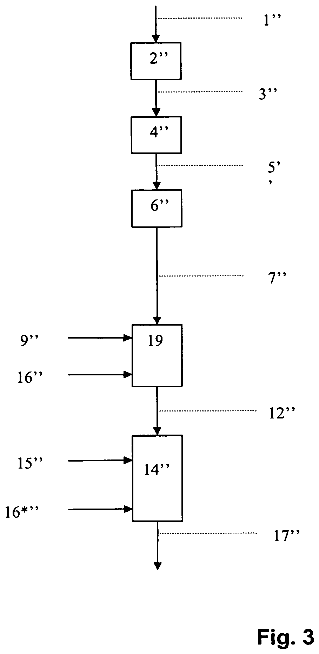

Fig. 3 stellt ein Ablaufschema des erfindungsgemäßen Verfahrens dar, bei die Erwärmung durch Partialoxidation und die zur Aufbereitung gehörende Vorreformierung des Einsatzgases zur Umwandlung höherer Kohlenwasserstoffe in Methan in einem gemeinsamen Reaktor (19) durchgeführt wird.

### Gewerbliche Anwendbarkeit

Mit der Erfindung wird ein wirtschaftliches Verfahren zur Herstellung von Synthesegas durch Reformierung von kohlenwasserstoffhaltigen Gasen wie Erdgas oder verdampftes Naphtha zur Verfügung gestellt, das besonders günstig hinsichtlich Investitions- und Energie- bzw. Rohstoffkosten ist.

### Bezugszeichenliste

- (1, 1', 1"): Einsatzgas
- (2, 2', 2"): Gaserwärmung durch indirekte Wärmeübertragung
- (3, 3', 3"): Einsatzgas
- (4, 4', 4"): Entschwefelung
- (5, 5', 5"): Einsatzgas
- (6, 6', 6"): Gaserwärmung durch indirekte Wärmeübertragung
- (7, 7', 7"): Einsatzgas
- (8, 8', 8"): Vorreformierung
- (9, 9', 9"): Wasserdampf
- (10, 10', 10"): Einsatzgas
- (11): Gaserwärmung durch indirekte Wärmeübertragung
- (12, 12', 12"): Einsatzgas
- (13*): Wasserstoff, nur eingesetzt bei Dampfreformierung mittels Autothermreaktor
- (14, 14', 14"): Dampfreformierung
- (15, 15', 15"): Wasserdampf
- (16', 16"): Sauerstoff
- (16*, 16*', 16*"): Sauerstoff, nur eingesetzt bei autothermer Reformierung
- (17, 17', 17"): Synthesegas
- (18): Gaserwärmung durch Partialoxidation
- (19): Gaserwärmung durch Partialoxidation und Vorreformierung

## Patentansprüche

1. Verfahren zur Herstellung von Synthesegas aus kohlenwasserstoffhaltigem Einsatzgas, umfassend eine Aufbereitung des Einsatzgases und, daran anschließend, einen Hauptreformierungsschritt des Einsatzgases zu einem Kohlenoxide und Wasserstoff umfassenden Synthesegas, durchgeführt in einer Hauptreformierungszone, **dadurch gekennzeichnet, dass** die Aufbereitung des Einsatzgases einen Vorreformierungsschritt in einer Vorreformierungszone zur mindestens teilweisen Umwandlung höherer Kohlenwasserstoffe in Methan und eine vor der Einleitung in die Hauptreformierungszone durchgeführte Erwärmung des Einsatzgases durch exotherme katalytische Partialoxidation der Kohlenwasserstoffe unter Partialoxidationsbedingungen und unter Zugabe einer kontrollierten Menge eines Oxidationsmittels umfasst, wobei die Erwärmung des Einsatzgases durch exotherme katalytische Partialoxidation und der Vorreformierungsschritt in einem gemeinsamen Reaktor durchgeführt werden, wobei die Katalysatoren für die Vorreformierung und für die Partialoxidation in getrennten Betten vorgesehen werden, wobei der Partialoxidationskatalysator dem Vorreformierungskatalysator nachgeschaltet ist und das Oxidationsmittel strömungsmäßig nach der Vorreformierungszone zugegeben wird.

2. Verfahren gemäß Anspruch 1, **dadurch gekennzeichnet, dass** die Hauptreformierungszone einen Dampfreformer (SMR) oder ein Autothermreformer (ATR) oder Kombinationen oder Verschaltungen beider umfasst.

3. Verfahren nach Anspruch 2, **dadurch gekennzeichnet, dass** bei Anwesenheit eines Autothermreformers die Temperatur des Einsatzgases durch die exotherme katalytische Partialoxidation soweit angehoben wird, dass sich das Einsatzgas bei Eintritt in den Autothermreformer unter Zugabe zusätzlichen Sauerstoffs selbstentzündet.

4. Verfahren nach einem der vorigen Ansprüche, **dadurch gekennzeichnet, dass** als Oxidationsmittel Luft, sauerstoffangereicherte Luft oder Sauerstoff verwendet werden.

5. Verfahren nach einem der vorigen Ansprüche, **dadurch gekennzeichnet, dass** der für die exotherme katalytische Partialoxidation eingesetzte Katalysator als Schüttung körnigen Feststoffs, als Monolith oder als Metallnetz vorliegt und mindestens ein Metall der Gruppen 8, 9 oder 10 (VIII. Nebengruppe) des Periodensystems der Elemente, vorzugsweise Rhodium als Rhodiumdioxid, umfasst.

6. Verfahren nach einem der vorigen Ansprüche, **dadurch gekennzeichnet, dass** das Einsatzgas vor der Durchführung der exothermen katalytischen Partialoxidation auf eine Temperatur von mindestens 250 °C, bevorzugt mindestens 400 °C, vorgewärmt wird.

7. Verfahren nach einem der vorigen Ansprüche, **dadurch gekennzeichnet, dass** die durch katalytische Partialoxidation der Kohlenwasserstoffe bewirkte Temperaturerhöhung des Einsatzgases durch die zugegebene Menge des Oxidationsmittels geregelt wird.

## Claims

1. Process for preparing synthesis gas from hydrocarbonaceous feed gas, comprising processing of the feed gas followed by a main reforming step of the feed gas to give a synthesis gas comprising carbon oxides and hydrogen, conducted in a main reforming zone, **characterized in that** the processing of the feed gas comprises a preliminary reforming step in a preliminary reforming zone for at least partial conversion of higher hydrocarbons to methane and heating of the feed gas, conducted prior to the introduction into the main reforming zone, by exothermic catalytic partial oxidation of the hydrocarbons under partial oxidation conditions and with addition of a controlled amount of an oxidizing agent, wherein the heating of the feed gas by exothermic catalytic partial oxidation and the preliminary reforming are conducted in a common reactor, wherein the catalysts for the preliminary reforming and for the partial oxidation are provided in separate beds, wherein the partial oxidation catalyst is connected downstream of the preliminary reforming catalyst and the oxidizing agent is added downstream of the preliminary reforming zone in flow direction.

2. Process according to Claim 1, **characterized in that** the main reforming zone comprises a steam reformer (SMR) or an autothermal reformer (ATR) or combinations or connections of the two.

3. Process according to Claim 2, **characterized in that,** in the presence of an autothermal reformer, the temperature of the feed gas is raised by the exothermic catalytic partial oxidation to such an extent that the feed gas self-ignites on entry into the autothermal reformer with addition of additional oxygen.

4. Process according to any of the preceding claims, **characterized in that** the oxidizing agent used is air, oxygen-enriched air or oxygen.

5. Process according to any of the preceding claims, **characterized in that** the catalyst used for the exothermic catalytic partial oxidation takes the form of a bed of solid granular material, of a monolith or of a metal mesh and comprises at least one metal of group 8, 9 or 10 (transition group VIII) of the Periodic Table of the Elements, preferably rhodium as rhodium dioxide.

6. Process according to any of the preceding claims, **characterized in that** the feed gas, prior to the performance of the exothermic catalytic partial oxidation, is preheated to a temperature of at least 250°C, preferably at least 400°C.

7. Process according to any of the preceding claims, **characterized in that** the increase in temperature of the feed gas brought about by the catalytic partial oxidation of the hydrocarbons is controlled by the amount of the oxidizing agent added.

## Revendications

1. Procédé de fabrication d'un gaz de synthèse à partir d'un gaz de charge contenant des hydrocarbures, comprenant une préparation du gaz de charge et, après celle-ci, une étape de reformage principal du gaz de charge en un gaz de synthèse comprenant des oxydes de carbone et de l'hydrogène, réalisée dans une zone de reformage principal, **caractérisé en ce que** la préparation du gaz de charge comprend une étape de pré-reformage dans une zone de pré-reformage pour la transformation au moins partielle des hydrocarbures supérieurs en méthane et un chauffage du gaz de charge réalisé avant l'introduction dans la zone de reformage principal par oxydation partielle catalytique exothermique des hydrocarbures dans des conditions d'oxydation partielle et avec ajout d'une quantité contrôlée d'un oxydant, le chauffage du gaz de charge par oxydation partielle catalytique exothermique et l'étape de pré-reformage étant réalisés dans un réacteur commun, les catalyseurs pour le pré-reformage et pour l'oxydation partielle étant prévus dans des lits séparés, le catalyseur de l'oxydation partielle étant en aval du catalyseur de pré-reformage et l'oxydant étant ajouté après la zone de pré-reformage dans le sens de l'écoulement.

2. Procédé selon la revendication 1, **caractérisé en ce que** la zone de reformage principal comprend un reformeur à vapeur (SMR) ou un reformeur autotherme (ATR) ou des combinaisons ou des raccordements des deux.

3. Procédé selon la revendication 2, **caractérisé en ce que,** lors de la présence d'un reformeur autotherme, la température du gaz de charge est augmentée par l'oxydation partielle catalytique exothermique de telle sorte que le gaz de charge s'enflamme spontanément lors de l'entrée dans le reformeur autotherme avec ajout d'oxygène supplémentaire.

4. Procédé selon l'une quelconque des revendications précédentes, **caractérisé en ce que** de l'air, de l'air enrichi en oxygène ou de l'oxygène est utilisé en tant qu'oxydant.

5. Procédé selon l'une quelconque des revendications précédentes, **caractérisé en ce que** le catalyseur utilisé pour l'oxydation partielle catalytique exothermique se présente sous la forme d'un garnissage d'un solide granulaire, sous la forme d'un monolithe ou sous la forme d'un maillage métallique, et comprend au moins un métal du groupe 8, 9 ou 10 (groupe de transition VIII) du tableau périodique des éléments, de préférence le rhodium sous la forme de dioxyde de rhodium.

6. Procédé selon l'une quelconque des revendications précédentes, **caractérisé en ce que** le gaz de charge est préchauffé à une température d'au moins 250 °C, de préférence d'au moins 400 °C, avant la réalisation de l'oxydation partielle catalytique exothermique.

7. Procédé selon l'une quelconque des revendications précédentes, **caractérisé en ce que** l'élévation de température du gaz de charge réalisée par l'oxydation partielle catalytique des hydrocarbures est ajustée par la quantité d'oxydant ajoutée.
